# EUROPÄISCHE PATENTSCHRIFT

(11) **EP 2 804 789 B1**
(45) Veröffentlichungstag und Bekanntmachung des Hinweises auf die Patenterteilung: **21.10.2015**
(21) Anmeldenummer: 13700328.1
(22) Anmeldetag: 17.01.2013
(51) Int. Cl.: B60R 21/2338, B60R 21/36

(54) **SICHERHEITSVORRICHTUNG FÜR EIN KRAFTFAHRZEUG**
SAFETY DEVICE FOR A MOTOR VEHICLE
DISPOSITIF DE SÉCURITÉ POUR UN VÉHICULE AUTOMOBILE

(30) Priorität: 20.01.2012 DE 102012200805
(43) Veröffentlichungstag der Anmeldung: 26.11.2014
(73) Patentinhaber: Bayerische Motoren Werke Aktiengesellschaft, 80809 München (DE)
(72) Erfinder: KOESTLER, Ulrich, 85241 Hebertshausen (DE); SPRINGSKLEE, Markus, 80638 München (DE); IVENZ, Udo, 86456 Gablingen (DE)
(86) Internationale Anmeldenummer: PCT/EP2013/050810
(87) Internationale Veröffentlichungsnummer: WO 2013/107801

(56) Entgegenhaltungen:
- EP-A1- 2 548 772
- DE-A1-102011 100 114
- JP-A- 2006 219 046

## Beschreibung

Die vorliegende Erfindung bezieht sich auf eine Sicherheitsvorrichtung für ein Kraftfahrzeug, insbesondere eine Sicherheitsvorrichtung mit einem aufblasbaren Airbag, der an einer Außenseite einer Windschutzscheibe zum Fußgängerschutz angeordnet ist.

Es sind Sicherheitsvorrichtungen für Kraftfahrzeuge, insbesondere Fußgängerschutzvorrichtungen, bekannt, die einen Airbag aufweisen, der im Fall eines bevorstehenden Aufpralls mit einem Fußgänger aufgeblasen wird, und Teile der Windschutzscheibe abdeckt, um einen Aufprall des Fußgängers auf die Windschutzscheibe zu vermindern. Ein derartiger Airbag verdeckt jedoch die Sicht des Fahrers und erschwert, dass der Fahrer das Fahrzeug nach dem Aufprall sicher zum Stillstand bringen kann. Um dieses Problem zu lösen, ist eine Airbagrückholvorrichtung geschaffen worden, die flexible Bänder aufweist, um nach dem Aufprall und dem Auslösen des Airbags, den Airbag von der Scheibe zu ziehen. Derartige Rückholvorrichtungen sind beispielsweise in den Druckschriften JP 2006219046 A und der EP 2338745 A1 beschrieben worden.

Es ist nunmehr die Aufgabe der vorliegenden Erfindung, eine Sicherheitsvorrichtung für ein Kraftfahrzeug mit einem aufblasbaren Airbag zu schaffen, die es ermöglicht, den aufgeblasen Airbag zuverlässiger aus einem Blickfeld eines Fahrzeugfahrers zu holen.

Diese Aufgabe wird durch eine Sicherheitsvorrichtung für ein Kraftfahrzeug gelöst, die die Merkmale von Patentanspruch 1 aufweist. Bevorzugte Weiterbildungen sind in den abhängigen Ansprüchen beschrieben.

Das Dokument EP2548772 A1, das Stand der Technik gemäß Artike 54(3), EPÜ, ist, beschreibt eine Sicherheitsvorrichtung wobei einem aufblasbaren Airbag der sich im aufgeblasenen Zustand über eine Außenseite einer Windschutzscheibe erstreckt und sich mittels einer Rückholleine zumindest teilweise von der Windschutzscheibe nach den Unfall wegziehen kann, wobei die Rückholleine immer durch Schleifen in den Inneren von dem Airbag gezogen wird, und am Ende durch ein oder zwei Durchtrittsöffnungen nach ein und/oder zwei Aufrollaktuators.

Eine Sicherheitsvorrichtung für ein Kraftfahrzeug gemäß der vorliegenden Erfindung weist einen aufblasbaren Airbag und eine Rückholeinrichtung auf. Der aufblasbare Airbag ist derart angepasst, dass er sich Im aufgeblasenen Zustand über eine Außenseite einer Windschutzscheibe erstreckt. Ferner ist die Rückholeinrichtung derart angepasst, dass sie den aufgeblasenen Airbag mittels einer Rückholleine zumindest teilweise von der Windschutzscheibe zieht bzw. holt. Die Rückholleine verläuft dabei durch Leinendurchtrittsöffnungen, die in dem Airbag ausgebildet sind, abwechselnd innerhalb und außerhalb des Airbags.

Der aufgeblasene Zustand des Airbags wird insbesondere dann hergestellt, wenn die Sicherheitsvorrichtung einen Aufprall oder einen bald stattfindenden Aufprall erfasst. Dabei wird der Airbag insbesondere derart aufgeblasen, dass er sich zwischen der Windschutzscheibe und einem aufprallenden Körper, insbesondere einer aufprallenden Person, erstreckt. Die Rückholeinrichtung ist derart ausgebildet, dass sie nach einer bestimmten Zeit, beispielsweise einer Sekunde nach dem Auslösen oder dem Aufprall, den Airbag wieder soweit aus dem Sichtfeld des Fahrers zieht, so dass der Fahrer das Fahrzeug sicher zum Stillstand bringen kann. Die Rückholeinrichtung zieht dabei an zumindest einem Ende der Rückholleine und rollt die Rückholleine beispielsweise auf. Die Rückholleine verläuft abwechselnd durch Leinendurchtrittsöffnungen in dem Airbag innerhalb und außerhalb des Airbags. Insbesondere tritt die Rückholleine durch eine Leinendurchtrittsöffnung an einer Stelle in den Airbag ein und tritt an einer anderen Stelle durch eine weitere Leinendurchtrittsöffnung wieder aus dem Airbag aus.

Durch die vorstehend beschriebene Verflechtung der Rückholleine mit dem Airbag, d.h. der Airbaghülle. über die Leinendurchtrittsöffnungen, ist eine definierte Führung der Rückholleine gewährleistet. Insbesondere ist dadurch gewährleistet, dass sich die Rückholleine weder beim Aufblasen noch beim Zusammenziehen des Airbags in irgendeiner Form ungewünscht verheddert. Ferner gibt die Art und Weise, wie die Rückholleine und Leinendurchtrittsöffnungen an dem Airbag angeordnet sind, dies die Rückholrichtung des Airbags vor, so dass dieser zuverlässig aus dem Sichtfeld des Fahrers geholt bzw. gezogen werden kann.

Die Rückholleine kann an ihrem Ende an dem Airbag, d.h. an der Airbaghülle, fixiert sein.

Alternativ kann das Ende der Rürkholleine auch an einer anderen Stelle karosserieseitig, zum Beispiel an einem Airbaggehäuse, in dem der Airbag vor einem Aufblasen untergebracht ist, fixiert sein.

Die Leinendurchtrittsöffnungen sind bevorzugt derart ausgebildet, dass in dem Zustand, in dem sich die Rückholleine in der Leinendurchtrittsöffnung befindet, die Leinendurchtrittsöffnung durch die Rückholleine geschlossen ist.

Der Ausdruck "geschlossen" bedeutet hier, dass die Leinendurchtrittsöffnung durch Die Rückholleine möglichst gasdicht verschlossen ist. Unter "möglichst gasdicht" ist dabei zu verstehen, dass beim Aufblasen des Airbags derart wenig Gas entweichen kann, dass das Aufblasen des Airbags nicht beeinträchtigt wird. Hierdurch entweicht demnach beim Entfalten bzw. Aufblasen des Airbags an den besagten Stellen kein Gas oder zumindest möglichst wenig Gas.

Ferner können die Leinendurchtrittsöffnungen und die Rückholleine so ausgebindet sein, dass bei einem Auftreffen eines Körpers auf den Airbag zwischen der Rückholleine und der Leinendurchtrittsöffnung gewünscht entweicht. Hierdurch kann eine nachteilige Federwirkung des Airbags in Bezug auf den auftreffenden Körper vermindert werden.

Ferner können die Leinendurchtrittsöffnungen derart ausgebildet sein, dass die Rückholleine an den Leinendurchtrittsöffnungen nicht fixiert ist. Mit anderen Worten ist eine Bewegung der Rückholleine in den Leinendurchtrittsöffnungen möglich und auch gewollt.

Die Rückholleine kann ein flaches Band sein. Gleichermaßen kann die Rückholleine einen im Wesentlichen runden Querschnitt aufweisen, so dass die Rückholleine auch als Seil oder Schnur bezeichnet werden kann.

Gemäß einer Weiterbildung der Sicherheitsvorrichtung gemäß der vorliegenden Erfindung erstreckt sich die Rückholleine im aufgeblasenen Zustand des Airbags um den Airbag herum. Insbesondere erstreckt sich die Rückholleine um mehr als die Hälfte des Umfangs des aufgeblasenen Airbags oder erstreckt sich um nahezu den gesamten Umfang des aufgeblasenen Airbags.

Dies verbessert ebenso die Rückholfähigkeit des Airbags.

Bevorzugt sind weiterhin in dem Bereich der Leinendurchtrittsöffnungen Verstärkungen in dem Airbag angeordnet.

Diese Verstärkungen dienen dazu, dass der Airbag, also die Airbaghülle, nicht ungewollt, insbesondere nicht an dafür vorgesehenen Stellen, beim Ziehen an der Rückholleine aufgerissen wird.

Gemäß einer Weiterbildung der Sicherheitsvorrichtung der vorliegenden Erfindung weist der Airbag zumindest ein Gasauslassventil auf. Dabei kann die Rückholleine derart angepasst sein, dass die Rückholleine bei dem Zurückziehen des Airbags das Gasauslassventil in dem Airbag öffnen kann.

Ein Öffnen eines Gasauslassventils beim Zurückziehen des Airbags ermöglicht erst das Zurückziehen und damit eine Zusammenfaltung des Airbags. Ferner ermöglicht das Gasauslassventil eine reduzierte Federwirkung auf den auftraffenden Körper. Das Ziehen der Rückholleine bewirkt die Öffnung des Gasauslassventils.

Ein Gasauslassventil kann durch jegliche Öffnung in dem Airbag nach dem Ziehen der Rückholleine ausgebildet sein, aus welcher ausreichend Gas ausströmen kann.

Ferner ist bei der Sicherheitsvorrichtung gemäß der vorliegenden Erfindung das Gasauslassventil bevorzugt durch eine Sollreißsteile in dem Airbag ausgebildet.

Eine Solireißstelle kann durch eine Naht oder irgendeine Schwächung des Airbags, insbesondere eines Airbaggewebes, ausgebildet sein. Damit ist also der Airbag bzw. die Airbaghülle derart angepasst ist, dass die Rückholleine zumindest ein Gesausströmventil öffnen kann.

Bevorzugt kann sich die Sollreißrtelle an einem Ort befinden, an dem die Rückholleine an dem Airbag bzw. der Airbaghülle fixiert ist. Zum Beispiel kann ein Ende der Rückholleine an dem Airbag an dem Ort fixiert sein, an dem ein Gasauslassventil ausgebildet ist.

Gemäß einer Weiterbildung der Sicherheitsvorrichtung der vorliegenden Erfindung, Ist das Gasauslassventil an zumindest einer Leinendurchtrittsöffnung derart ausgebildet ist, dass die Rückholleine die Leinendurchtrittsöffnung bei dem Zurückziehen des Airbags vergrößert und damit das Gasauslassventil öffnet.

Mit anderen Worten wird dabei die Leinendurchtrittsöffnung erweitert, so dass die Leinendurchtrittsöffnung gleichzeitig als Gasauslassventil fungiert. Selbstverständlich können auch mehrere Leinendurchtrittsöffnungen Gasauslassventile ausbilden.

Ferner kann die Rückholleine der Sicherheitsvorrichtung der vorliegenden Erfindung gemäß einer Weiterbildung reibungsvergrößernde Mittel aufweisen, die ein Vergrößern der Leinendurchtrittsöffnungen bei einem Zurückholen / Zurückziehen des Airbags begünstigen.

Damit kann eine Gasauslassventilbildung an der Leinendurchtrittsöffnung begünstigt werden.

Reibungsvergrößernde Mittel können z.B. eine Beschichtung sein, die eine Reizwirkung gegenüber dem Airbag bzw. der Airbaghülle hat, so dass die Leinendurchtrittsöffnung durch eine Relativbewegung zwischen der Rückholleine und der Leinendurchtrittsöffnung mittels Reißen oder Schneiden zur Ausbildung des Gasauslassventils erweitert wird.

Der Airbag bzw. die Airbaghülle weist also eine Sollbruchstelle oder Sollreißstelle auf, deren Aufreißen durch Ziehen an der Rückholleine begünstigt wird.

Bevorzugt kann bei der Sicherheitsvorrichtung der Airbag aus einem Gewebe ausgebildet sein.

Gemäß einer Weiterbildung der Erfindung kann auch mehr als eine Rückholleine zum Zurückziehen des Airbags vorgesehen sein.

Ein vorstehend beschriebenes Gasauslassventil kann auch unabhängig von einer Rückholeinrichtung bzw. einer Rückholleine ausgebildet sein. Dies bedeutetet, dass eine Sicherheltseinrichtung gemäß der vorliegenden Erfindung in dem Airbag jegliches Gasauslassventil aufweisen kann, dass vor dem Zurückholen oder bei dem Zurückholen des Airbags aufmachbar ist.

Eine Figur zeigt eine Sicherheitsvorrichtung gemäß einem Ausführungsbeispiel der vorliegenden Erfindung.

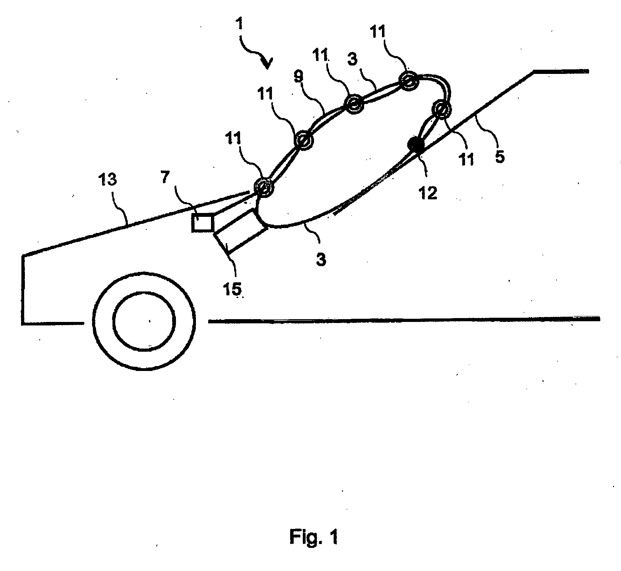

Wie in der Figur gezeigt ist, hat eine Sicherheitsvorrichtung 1 gemäß dem Ausführungsbeispiel der vorliegenden Erfindung einen Airbag 3, der hier im ausgelösten, aufgeblasenen Zustand dargestellt ist und sich vor einer Windschutzscheibe 5 erstreckt, eine Rückholeinrichtung 7, eine Rückholleine 9 und Leinendurchtrittsöffnungen 11.

Die Sicherheitsvorrichtung 1 ist im Bereich eines hinteren Endes einer Motorhaube 13 vor der Windschutzscheibe 5 eines Kraftfahrzeugs angeordnet. Insbesondere ist der Airbag 3 im zusammengefalteten Zustand zusammen mit einem Gasgenerator 15. unter der Motorhaube 13 oder einem Windlaufelement angeordnet. Bei Auslösung der Sicherheitsvorrichtung, d.h. bei einem Aufblasen des Airbags 3 wird die Motorhaube 13 angehoben oder eine Klappe in der Motorhaube oder in dem Windlaufelement geöffnet, so dass sich der Airbag 3 über der Windschutzscheibe 5 entfalten kann, so wie es schematisch in der Figur dargestellt ist. Die Rückholleine 9 gemäß dem Ausführungsbeispiel tritt an einer vorderen Stelle des Airbags 3 durch eine erste Durchtrittsöffnung 11 in den Airbag 3 ein, tritt an einer zweiten Durchtrittsöffnung 11 wieder aus dem Airbag 3 aus, tritt an einer dritten Durchtrittsöffnung 11 wieder in den Airbag 3 ein, tritt an einer vierten Durchtrittsöffnung 11 aus dem Airbag 3 aus und tritt an einer fünften Durchtrittsöffnung 11 wieder in den Airbag 3 ein und ist schließlich an einem Befestigungspunkt 14 an dem Airbag 3 fixiert. Alternativ können auch mehr oder weniger Durchtrittsöffnungen 11 in dem Airbag 3 ausgebildet sein.

Somit ist die Rückholleine 9 mit dem Airbag 3 verflochten und bleibt sowohl beim Aufblasen des Airbags 3 als auch beim Einholen des Airbags 3 in Bezug auf den Airbag 3 in einer durch die Durchtrittsöffnungen 11 definierten Postition.

Der Befestigungspunkt 12 ist an einer Hinterseite des Airbags 3, d.h. der Seite des Airbags 3, die der Windschutzscheibe 5 zugewandt ist, angeordnet, so dass sich die Rückholleine 9 um den Airbag 3 herum erstreckt.

Im Falle des Aufpralls wird nach einer bestimmten Zeitspanne von z.B. einer Sekunde die Rückholeinrichtung 7 durch die Sicherheitsvorrichtung aktiviert und die Rückholeinrichtung 7 zieht an der Rückholleine 9, insbesondere an einem Ende der Rückholleine 9, so dass der Airbag 3 mittels der Rückholleine 9, die an dem Befestigungspunkt 12 an dem Airbag 3 fixiert ist, von der Windschutzscheibe 5 in Richtung der Rückholeinrichtung 7 gezogen wird.

Dabei erfolgt auch tendenziell eine Relativbewegung zwischen der Rückholleine 9 und dem Airbag 3, insbesondere an den Stellen der Leinendurchtrittsöffnungen 11, so dass eine gewisse Reibung zwischen der Rückholleine 9 und dem Airbag 3 stattfindet Hierdurch werden die Leinendurchtrittsöffnungen, oder wird zumindest eine Leinendurchtrittsöffnung, erweitert oder aufgerissen, so dass ein oder mehrere Löcher entstehen, die als Entlüftungslöcher oder Ventile dienen, um das in den Airbag 3 geblasene Gas entweichen zu lassen.

Ein Gasauslassventil kann auch an dem Befestigungspunkt 14 der Rückholleine 9 ausgebildet sein, wobei das Gasauslassventil durch Ziehen an der Rückholleine 9 aufgemacht wird.

Die entstandenen Entlüftungsöffnungen oder Ventile dienen damit einer leichteren Rückholung des Airbags 3 als auch einer verminderten Federwirkung des Airbags 3 auf eine aufprallende Person.

## Patentansprüche

1. Sicherheitsvorrichtung (1) für ein Kraftfahrzeug mit einem aufblasbaren Airbag (3), der derart angepasst ist, dass er sich im aufgeblasenen Zustand über eine Außenseite einer Windschutzscheibe (5) erstreckt, und einer Rückholeinrichtung (7), die derart angepasst ist, dass sie den aufgeblasenen Airbag (3) mittels einer Rückholleine (9) zumindest teilweise von der Windschutzscheibe (5) zieht, wobei die Rückholleine (9) durch Leinendurchtrittsöffnungen (11), die in dem Airbag (3) ausgebildet sind, abwechselnd innerhalb und außerhalb des Airbags (3) verläuft.

2. Sicherheitsvorrichtung nach Patentanspruch 1, wobei die Rückholleine (9) sich im aufgeblasenen Zustand des Airbags (3) um den Airbag (3) herum erstreckt.

3. Sicherheitsvorrichtung nach Patentanspruch 1 oder 2, wobei im Bereich der Leinendurchtrittsöffnungen (11) Verstärkungen in dem Airbag (3) angeordnet sind.

4. Sicherheitsvorrichtung nach einem der Patentansprüche 1 bis 3, wobei der Airbag (3) zumindest ein Gasauslassventil aufweist und die Rückholleine (9) derart angepasst ist, dass die Rückholleine (9) bei dem Zurückziehen des Airbags (3) das Gasauslassventil in dem Airbag (3) öffnen kann.

5. Sicherheitsvorrichtung nach Patentanspruch 4, wobei das Gasauslassventil durch eine Sollreißstelle in dem Airbag (3) ausgebildet ist

6. Sicherheitsvorrichtung nach Patentanspruch 4 oder 5, wobei das Gasauslassventil an zumindest einer Leinendurchtrittsöffnung (11) derart ausgebildet ist, dass die Rückholleine (9) die Leinendurchtrittsöffnung (11) bei dem Zurückziehen des Airbags (3) vergrößert und damit das Gasauslausventil öffnet.

7. Sicherheitsvorrichtung nach Patentanspruch 6, wobei die Rückholleine (9) mit einem reibungsvergrößernden Mittel zum Begünstigen eines Vergrößerns der Leinendurchtrittsöffnung (11) versehen ist.

8. Sicherheitsvorrichtung nach einem der Patentansprüche 1 bis 8, wobei der Airbag (3) aus einem Gewebe ausgebildet ist.

## Claims

1. A safety device (1) for a motor vehicle, comprising an inflatable airbag (3) disposed so that when inflated it extends beyond an outside of a windscreen (5), also comprising a return motion device (7) disposed so that it pulls the inflated airbag (3), via a return line (9), at least partly away from the windscreen (5), wherein the return line (9) passes through line openings (11) in the airbag (3) and extends alternating inside and outside the airbag (3).

2. A safety device according to claim 1, wherein the return line (9) extends around the airbag (3) when the airbag (3) is inflated.

3. A device according to claim 1 or claim 2, wherein reinforcements are formed in the airbag (3) in the neighbourhood of the line openings (11).

4. A safety device according to any of claims 1 to 3, wherein the airbag (3) comprises at least one gas outlet valve and the return line (9) is disposed so that when the airbag is pulled back, the return line (9) can open the gas outlet valve in the airbag (3).

5. A safety device according to claim 4, wherein the gas outlet valve is in the form of a predetermined tear point in the airbag (3).

6. A safety device according to claim 4 or claim 5, wherein the gas outlet valve is formed on at least one line opening (11) such that when the airbag (3) is pulled back the return line (9) enlarges the opening (11) and thus opens the gas outlet valve.

7. A safety device according to claim 6, wherein the line (9) comprises a friction-increasing means for easier enlargement of the opening (11).

8. A safety device according to any of claims 1 to 7, wherein the airbag (3) is a woven cloth.

## Revendications

1. Dispositif de sécurité (1) pour un véhicule automobile comportant un coussin gonflable (3) adapté pour couvrir à l'état gonflé, le côté extérieur d'un pare-brise (5) ainsi qu'une installation de rappel (7) pour tirer le coussin (3), gonflé, à l'aide d'une lanière de rappel (9), au moins partiellement du pare-brise (5), la lanière de rappel (9) passant par des orifices de passage de lanière (11), réalisés dans le cousin gonflable (3), et passant alternativement à l'intérieur et à l'extérieur du cousin gonflable (3).

2. Dispositif de sécurité selon la revendication 1,
**caractérisé en ce que**
la lanière de rappel (9) s'étend autour du coussin gonflable (3) lorsque celui-ci est à l'état gonflé.

3. Dispositif de sécurité selon la revendication 1 ou 2,
**caractérisé par**
des renforcements du coussin gonflable (3) au niveau des orifices de passage de la lanière (11).

4. Dispositif de sécurité selon l'une des revendications 1 à 3,
**caractérisé en ce que**
le coussin gonflable (3) comporte au moins une soupape de sortie de gaz et la lanière de rappel (9) est adaptée pour qu'en retirant le coussin gonflable (3), la lanière (9) ouvre la soupape de sortie de gaz du coussin gonflable (3).

5. Dispositif de sécurité selon la revendication 4,
**caractérisé en ce que**
la soupape de sortie de gaz est constituée par un point de rupture de consigne du coussin gonflable (3).

6. Dispositif de sécurité selon la revendication 4 ou 5,
**caractérisé en ce que**
la soupape de sortie de gaz est réalisée sur au moins un orifice de passage de lanière (11) de façon qu'en retirant le coussin gonflable (3), la lanière de rappel (9) agrandisse l'orifice de passage de lanière (11) et ouvre ainsi la soupape de sortie de gaz.

7. Dispositif de sécurité selon la revendication 6,
**caractérisé en ce que**
la lanière de rappel (9) est munie d'un moyen augmentant le frottement pour favoriser l'agrandissement de l'orifice de passage de lanière (11).

8. Dispositif de sécurité selon l'une des revendications 1 à 8,
**caractérisé en ce que**
le coussin gonflable (3) est fait en un tissu.
